# EUROPEAN PATENT APPLICATION

(11) **EP 3 842 351 A1**
(43) Date of publication of application: **30.06.2021**
(21) Application number: 19219880.2
(22) Date of filing: 27.12.2019
(51) Int. Cl.: B65B 5/08, B65B 21/06, B65B 21/18, B65B 21/20, B65G 47/08, B65G 47/86

(54) **AN ARTICLE PICKING AND TREATING APPARATUS**

(71) Applicant: Anheuser-Busch InBev S.A., 1000 Brussels (BE)
(72) Inventor: DEKOCKER, Wim, 3000 Leuven (BE); DUPERRAY, Philippe Jean Marie, 36000 Châteauroux (FR)
(74) Representative: Oxley, Robin John George

(57) **Abstract**

The present invention provides an apparatus for picking and treating articles simultaneously, said picking and treating each being operated at a first and a second conveying line.

## Description

### TECHNICAL FIELD

The present invention generally relates to an article picking and treating apparatus.

### BACKGROUND

In the recent years, there has been a many-fold increase in the trend of grouping large number of articles or items such as food items, including liquid foods, home essentials, stationary items, beverage containers, and the like, in the form of secondary packages, for various purposes such as to enable bulk selling, easy transportation, handling, and the like.

Generally, the packaging of one or more articles in so-called secondary packages involves multiple steps including receiving a supply of such articles from one or more in-feeds, picking up and dropping these in the packages and then closing the packages.

Numerous attempts have been made to develop improved systems for increased speed and accuracy.

Conventionally, moving items from an article feed conveyor into open receptacles, such as for example cardboard boxes, is achieved by means of effectors and/or manipulators, which may also take the form of robots or automatons. One such robotic arm is disclosed in US Patent No. 5,060,455 ("Robotic Case Packaging System and Method"), the contents of which are hereby incorporated by reference. Further, some high-speed robotic arms as one disclosed in US Patent No. 4,976,582 are also utilized.

However, such conventional robotic transfer mechanisms are often not able to accommodate high speed handling because of the use of multiple feed lines, one supplying articles and the other supplying open packages..

Various other transfer mechanisms have been developed for picking up articles from the infeed-line and depositing them within the packages at a second conveying line. For example, DE19731656C1 discloses a device, that can automatically transfer articles from a first conveyor to a second conveyor, in order to organize or distribute individual packages.

German patent no. 4204993 discloses a mechanism for supplying containers to a continuously operating packaging machine. The mechanism includes a plurality of gripping heads which are hinged at one lever, respectively, while being rotationally driven. In addition, the patent discloses the use of an additional conveyor belt for guiding the articles towards the direction of the respective gripping heads. Bottles are arranged in rows, stopped at one end of the conveyor belt by a stop, and accepted by one of the gripping heads. Once they have been accepted, the stop is lowered. Further bottles having moved up in the meantime and can be accepted by another gripping head and dropped into another following crate.

However, such conventionally known transfer systems have several shortcomings, for example, these mechanisms generally require the packaging cartons to be held generally stationary while the packages are being inserted therein and therefore are subjected to intermittent motion in connection with the carton filling operation. Particularly this intermittent motion requires rapidly accelerating and/or decelerating these supplies of articles as well as packages which in turn may cause collision of the articles against each other and in some instances within the packages which receive them.

To overcome the above problem, this transfer mechanism must be able to manage a "pitch" adjustment between individual articles or article groupings and/or packages. Pitch is generally defined as a central distance between two consecutive items, whatever the items are. Currently, this pitch is set and monitored by multi-axes robots capable of line-tracking the articles, items or (box-shaped) packages.The loading follows a pre-determined grouping of articles to be packed, corresponding to a certain number of units of articles or products per package (e.g., box). Further, some variable-pitch pick and place devices have been developed, such as the device disclosed in US Patent No. 5,290,134, to provide the capability of simultaneous pick-up and deposit even where the pitch of one feed may differ from that of another feed. However, such in-line tracking and variable pick-up mechanisms adjustment requires a lot of calculations and analysis, and within a constant changing environment, it is a considerable challenge.

Additionally, the currently known transfer systems are accommodated to transfer a predetermined group of articles having a shape, configuration, size, ornumber of articles in a fixed size package. If however, there is a need to switch to a different configuration, package shape, package size or other, , these robotic arms and other currently known machines require a manual adjustment. Such manual change-over period is an expensive delay in any plant.

Accordingly, as can be understood from the foregoing discussion, none of the existing solutions completely provide the flexibility of using a same packaging machine to handle varying configurations, shapes and pitches during an intermittent and/or continuous packaging operation of various kind of articles within a package. Thus, in the context of the above, an improved article picking and treating apparatus is desired, which while being cost effective and easy to implement allows to carry out packaging even with varying pitches, shapes, sizes, arrangements, and the like without needing interchanging elements and components.

### SUMMARY

In one aspect of the invention, a article picking and treating apparatus for picking up a set of articles from a first conveying line and releasing into a package at a second conveying line is provided. The article picking and treating apparatus includes a pair of closed loop conveying tracks having one or more pairs of vertically movable modular track portions. The apparatus further includes a plurality of support means configured generally transversally to the pair of closed loop tracks, each extending between and movably connected to the pair of closed loop tracks at its opposite ends, through a support movement mechanism. The article picking and treating apparatus further includes a plurality of gripper sets movingly supported onto a plurality of support means.

In operation, horizontal movement of the plurality of support means across the pair of closed loop conveying tracks and a vertically upward and/or downward movement of the one or more pairs of modular track portions is synchronized in such a way that one or more of the gripper sets is adapted to selectively pick up a set of articles from a first location while one or more of the gripper sets selectively treats a set of already picked articles at a second location.

In the context of the present invention, articles may be of any type, food or non-food.

In the context of the present invention, treating articles may include performing any type of action on the articles, such as packing, orienting, mounting, fixing, gluing, welding, printing, labeling, etc, and combinations thereof. More specifically in the beverage industry, treating may in addition also comprise closing beverage containers, for example by gripping crowns at a first location, while closing beverage containers at a second location with already picked up crowns.

In the context of the present invention a gripper head is generally adapted to pick up an article. It may be further adapted to perform any treatment, i.e. any type of action, on the picked-up articles at a second location as mentioned earlier.

Generally, the support movement mechanism includes a plurality of pairs of support movers, each pair adapted to movingly engage one of the support means through an engagement means.

Further, the engagement means includes a pair of engaging lugs, each connected to one of the pair of support movers, and adapted to engage one end of the support means such that a horizontal movement of the pair of support movers horizontally moves the support means connected there between.

Particularly, the plurality of support means includes a plurality of rails extending between the pair of closed loop tracks and in a direction generally parallel to the first conveying line and the second conveying line.

Possibly, each of the gripper set includes one or more individual gripping heads arranged in a predetermined configuration movingly supported onto the corresponding support means.

Optionally, each of the gripper sets is longitudinally movable onto the corresponding support means through a gripper movement mechanism between a first end connected to a first conveying track and a second end connected to a second conveying track.

Further optionally, the gripper movement mechanism includes a plurality of gripping movers movingly configured onto each of the plurality of support means and adapted to engage one of the gripping heads therewith.

Optionally, one or more of the support means may support an article treatment device different from the gripper sets. For example, gripper sets may be alternated with a set of printing heads, a set of gluing heads, or any other functional element for performing an action onto a set of articles.

Yet further optionally, each of the longitudinally movable gripper-sets of the plurality of gripper sets has a varyingly adjustable pitch there between.

Moreover, the variably adjustable pitch of each of the gripper sets is determined on the basis of one or more factors selected from but not limited to difference in speed of conveying lines, difference between pitch of packages, arrangement of beverage containers, and the like.

In an embodiment, the gripper sets may be adapted to pick up the set of articles from a first conveying line and adapted to treat already picked up articles at a second conveying line.

In a preferred embodiment, the horizontal and/or circular movement of the plurality of support means across the pair of closed loop conveying tracks and the vertical movement of one or more pair of the modular track portions is synchronized in such a way that at least one of the gripper sets is adapted to pick up the set of articles from the first conveying line, while at least one other gripper set is adapted to drop a set of already picked up articles in a package at the second conveying line simultaneously.

Possibly, the article picking and treating apparatus includes a first powering means for powering the pair of closed loop conveying tracks selected from one or more of but not limited to linear motors, servo motors and synchronic and/or asynchronic motor drives.

Further possibly, the article picking and treating apparatus includes a second powering means for enabling a movement of each of the plurality of movers including the support movers and the treatment set movers wherein further the second powering means is selected from one or more of but not limited to linear motors, servo motors and synchronic and/or asynchronic motor drives.

Preferably, the first conveying line is an output line of an article manufacturing unit having one or more means for grouping and/or arranging the articles in the predetermined configuration, whereas the second conveying line is an output of a package forming unit.

Possibly, the package is an already formed top open box having one or more side flaps for facilitating a closure thereof.

Further possibly, the package may be formed of a foldable blank of a material selected from one or more of, but not limited to, carton, paperboard, thermoplastic, hybrid material, and the like.

Optionally, the article picking and treating apparatus further includes a guiding unit adapted to keep the packages in an open state during the release of already picked up articles therein.

Possibly, the article picking and treating apparatus further includes a control unit for optimizing the movement of each of the conveying tracks, the support movers, the gripping movers, the gripping heads, in accordance to a desired pick-up and/or drop operation either continuously and/or intermittently.

Further possibly, the control unit includes one or more sensors, one or more input units, a processor unit and an output unit.

In a preferred embodiment in accordance with the present invention, a method of packaging a set of articles is disclosed. The method includes receiving a continuous and/or intermittent supply of articles at the first conveying line. The method further includes grouping the articles at the first conveying line in a predetermine configuration and/or arrangement. Furthermore, the method includes receiving a continuous and/or intermittent supply of packages at the second conveying line. The method furthermore includes synchronizing a horizontal and/or circular movement of the plurality of support means across the pair of closed loop conveying tracks and a vertical movement of one or more pair of the modular track portions in such a way that each of the gripper sets is facilitated to selectively pick up a set of articles from the first conveying line and/or to selectively release already picked up articles into one of the packages at the second conveying line

Furthermore, the method includes optimizing the longitudinal movement of the gripper sets onto the corresponding means in accordance to a predetermined configuration of the set of articles to be packed.

Optionally, the method includes orienting the set of articles before releasing them within the package at the second conveying line.

Other aspects, features and advantages of the subject matter disclosed herein will be apparent from the description, the drawings, and the claims.

### BRIEF DESCRIPTION OF THE DRAWINGS

FIG. 1 illustrates a schematic diagram representing an article picking and treating apparatus, in accordance with the present invention;
FIG. 2a illustrates a schematic diagram representing an exemplary article picking and treating apparatus configured between a first conveying line and a second conveying line and adapted for packaging articles, in accordance with a specific embodiment of the present invention;
FIG. 2b illustrates a front view diagram representing the exemplary article picking and treating apparatus configured between the first conveying line and the second conveying line, in accordance with an embodiment of the present invention;
FIG. 3 illustrates an exemplary secondary package, in accordance with a preferred embodiment of the present invention;
FIG. 4a illustrates an exemplary support means with gripper set, in accordance with a preferred embodiment of the present invention;
FIG. 4b illustrates an exemplary support rail, in accordance with a preferred embodiment of the present invention; and
FIG. 4c illustrates an exemplary gripper set, in accordance with the preferred embodiment of the present invention;
FIG. 5a, 5b, 5c illustrates an exemplary guiding unit, in accordance with the preferred embodiment of the present invention;
Fig 5d illustrates an exemplary pair of guiding means of the guiding unit, in accordance with the preferred embodiment of the present invention;

### DETAILED DESCRIPTION

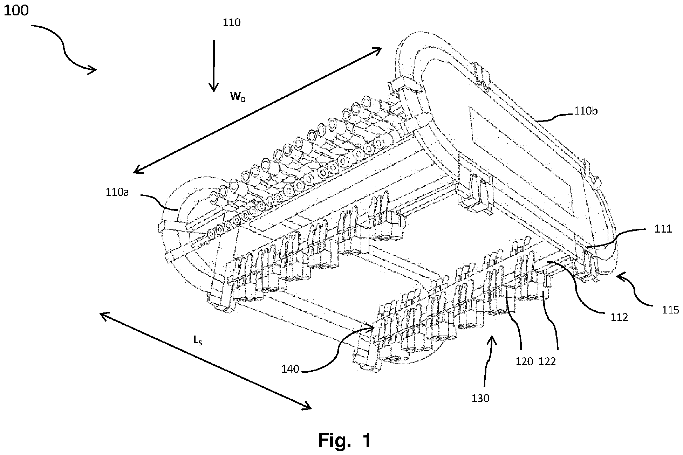

As illustrated in FIG. 1, the present invention provides an article picking and treating apparatus **100** for picking and treating a set of articles (not shown) received at a first location, while treating an already picked up set of articles at a second location. The article picking and treating apparatus **100** includes a pair of generally parallel closed loop conveying tracks **110** having one or more pairs of vertically movable modular track portions **111.** The article picking and treating apparatus **100** further includes a plurality of support means **112,** each extending between and movably connected to the pair of closed loop tracks **110,** in a longitudinal direction **L_{S}** generally parallel to the generally parallel closed loop conveying tracks **110.** The article picking and treating apparatus **100** further includes a vertical movement mechanism **115** for moving each of the pair of the modular track portions **111** in a vertically upward and/or downward direction and a support movement mechanism **130** adapted to circularly move each of the support means **112** in a generally widthwise direction **W_{D}**, across the pair of conveying tracks **110.**

The article picking and treating apparatus **100** furthermore includes a plurality of gripper sets **120** movingly supported onto each of the support means **112.** Each of the gripper sets **120** include one or more individual gripping heads **122** arranged in a predetermined configuration and movingly supported onto the support means **112** through a gripper movement mechanism **140.** Each of the gripper sets **120** is adapted to perform an operation selected from pickup and treating a predetermined set of articles to be packed by the article picking and treating apparatus **100.** In operation, the circular movement of the plurality of support means **112,** including the longitudinal movement of the plurality of gripper sets **120** supported thereon, and the vertical movement of the pair modular track portions **111** is synchronized in such a way that one or more gripper sets **120** is adapted to selectively pick up a set of articles from a first location while one or more of the gripper sets selectively treat a set of already picked articles at a second location. Preferably, the first and second locations are a first and second conveying line in parallel. In that case, the apparatus enables transferring and treating articles in a direction transversal to the conveying lines while these lines are moving in continuous operation.

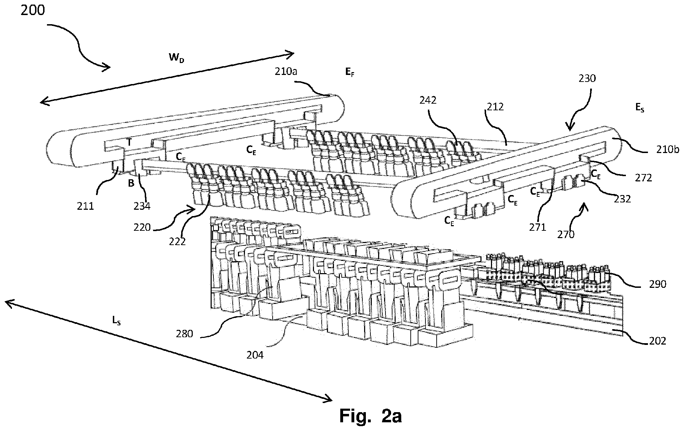

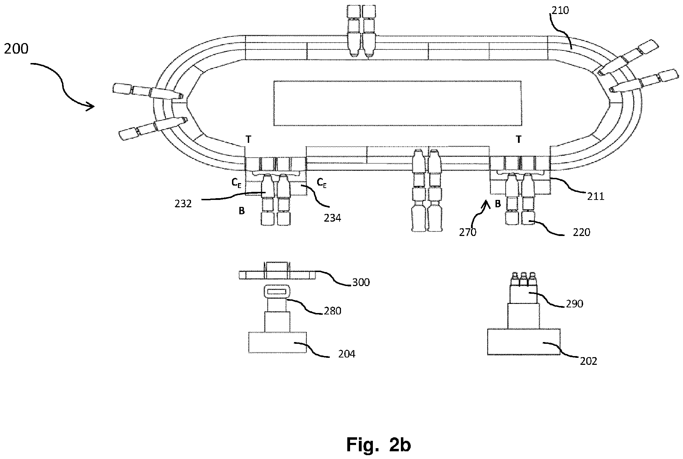

In description of the FIG. 2 that follow, elements common to the schematic system will have the same number designation unless otherwise noted. Figs. 2a and 2b, illustrates an exemplary article picking and treating apparatus **200** employed to pack a supply of beverage containers **290** received at a first conveying line **202** into a supply of packages received at the second conveying line **204.** Preferably, the article picking and treating apparatus is adapted to intermittently pick up one or more already filled beverage containers **290** from the first conveying line **202** and releases the same within one or more packages **280** at the second conveying line **204** carrying a feed of a plurality of already formed top and/or side opened packages **280.**

In a preferred embodiment, the plurality of beverage containers **290** received at the first conveying line **202** is generally formed into groups in accordance to a desired predetermined arrangement. However, in other embodiments, the article picking and treating apparatus **200** may include a grouping means (not shown) adapted to group the supply of beverage containers within the desired predetermined arrangement. The grouping means in such instance may include any suitable grouping mechanism already known in the art, for grouping and arranging the beverage containers at an out-feed of a conveying line.

The article picking and treating apparatus **200** includes a pair of closed loop conveying tracks **210,** including a first track **210a** and a second track **210b,** both generally in the form of circular tracks extending generally perpendicular to the first conveying line **202** and the second conveying line **204.** The pair of closed loop conveyors **210** includes one or more pair of vertically movable modular track portions **211** adapted to move vertically upward and/or downward through a vertical movement mechanism **270.**

In an embodiment, the vertical movement mechanism **270** includes a pair of outer rails **271,** one positioned along each of the connecting end **C_{E}** of the modular track portions **211** with the corresponding conveying track **210.** The vertical movement mechanism **270** further includes a rail receiving slot **272** configured on each of the circular tracks **210** at one or more points of contact **C** with the corresponding connecting end **C_{E}** of the pair of modular track portions **211.** Each of the receiving slots **272** is configured to movingly receive the corresponding outer rails **271** such that the pair of outer rails **271** is adapted to move vertically upwards and downward through the rail receiving slot so as to facilitate an upward and/or downward movement to the corresponding pair of modular track portions **211** between a top position **T** and a bottom position **B** thereof.

However, in other embodiments, the vertical movement mechanism **270** may include any suitable and conventionally known vertical movement mechanism that may be utilized for the selective movement of each of the pair of modular track portions **211** between the top position **T** and the bottom position **B.**

The article picking and treating apparatus **200** further includes a plurality of support means **212** extending transversally between the pair of conveying tracks **210,** and in a direction generally parallel to the first conveying line **202** and the second conveying line **204.** Each of the plurality of support means **212** is movingly connected to the pair of tracks **210** at each of its end through a support movement mechanism **230.**

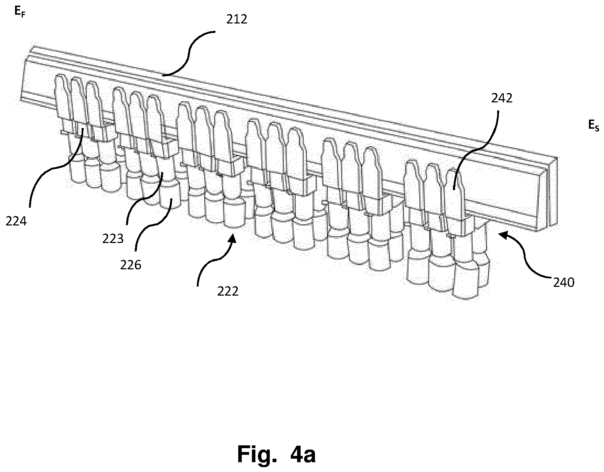

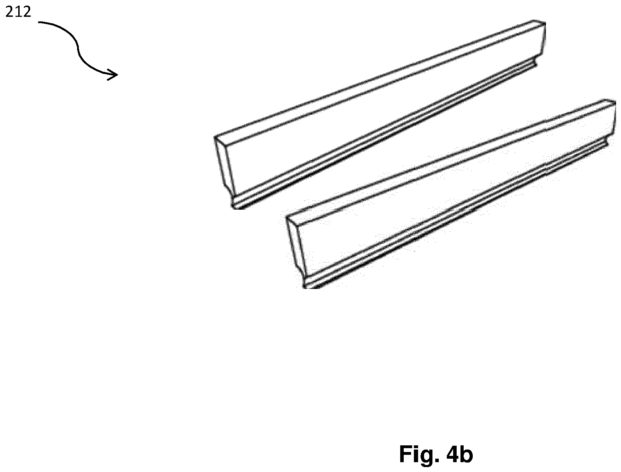

In an embodiment as illustrated in Figs 4a and 4b, the support means **212** may be in the form of a support rail **212,** comprising a generally linear rail having a first end **E_{F}** connected to the first track **210a** and a second end **E_{S}** connected to the second track **210b** through the support movement mechanism **230** such that a longitudinal direction **L_{S}** of each support means **212** is generally perpendicular to each of the conveying tracks **210a, 210b** and extends there between to facilitate a connection between the tracks **210.**

As disclosed earlier, the support movement mechanism **230** is a movement mechanism generally adapted to move each of the support means **212** along the pair of conveying tracks **210.** In a preferred embodiment, the support movement mechanism **230** includes a pair of support movers **232,** each configured at an opposite end of the supporting rail **212** through one or more engagement means **234.** Further, each of the support movers **232** is movingly connected to one of the conveying tracks **210** such that movement of the pair of support movers **232** allows the possibility of moving the corresponding support rail **212** circularly across the pair of conveying tracks **210.**

In an embodiment, the engagement means **234** includes a pair of engaging lugs, each connected to one of the pair of support movers **232,** and adapted to engage the opposite ends of the support rail **212** such that each of the supporting rails **212** is movable towards and away from each other in a widthwise direction **W_{D}** along the pair of circular tracks **210.**

The article picking and treating apparatus **200** further includes a plurality of gripper sets **220** movingly supported onto the support means **212,** adapted to perform pickup and/or release operations for the beverage containers **290** during the packaging thereof.

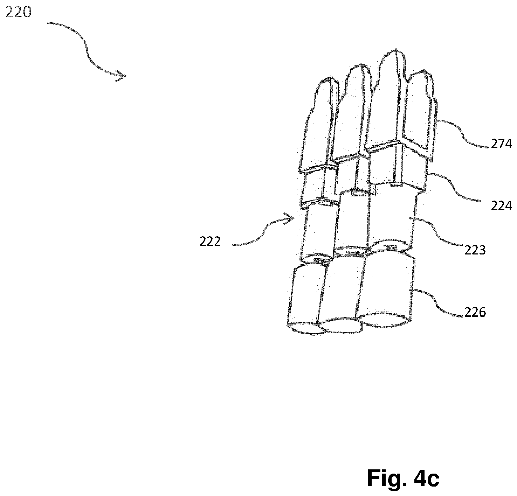

The gripper set **220** includes a plurality of individual gripping heads **222** grouped together within a predetermined arrangement. The gripping head **222** is generally a bottle picker and/or releasing component. In a preferred embodiment, as illustrated in Fig.4c, the gripping head **222** includes a gripper body **224** extending towards a downwardly protruding head **226** adapted to selectively perform an operation selected from pick up and/or release operations. The head **226** is of a shape and/or size and/or dimension complementary to the shape, size, or dimension of the article **290** and/or a contact portion thereof so as to enable the possibility of performing the pick-up and/or release operation.

The gripping head **222** may further include an orienting mechanism **223** adapted to rotate for example beverage containers picked therewith in a desired orientation, before dropping these onto the second conveying line **204,.** The container orienting mechanism **223** may be selected from one or more of, but not limited to, any suitable conventional rotating mechanism such as a rotational servo motor, and the like.

In other embodiments, the gripping head **222** may be selected from any conventionally mechanism known in the art and suitable for picking and/or releasing articles.

In a preferred embodiment, each of the gripping heads **222** is individually movable along the support rail **212** between the first end **E_{F}** and the second end **E_{S}**, using one or more gripper movement mechanisms **240** (Fig 4a). In some instances, the gripper movement mechanism **240** includes a plurality of grippers movers **242** movingly configured onto each of the support rails **212** such that each of the movers **242** is adapted to movingly engage one of the gripping heads **222** therewith. Accordingly, in such embodiments, the predetermined arrangement of the gripping heads **222** within each of the gripper sets **220** may be changed dynamically by a relative movement between the support rails **212** in the widthwise direction **W_{D}** and movement of the gripping heads **222** in the longitudinal direction **L_{S}** thereof.

Alternatively, in some embodiments, each of the gripping head **222** is stationary to the corresponding gripper set **220,** which in turn is itself movable along the support rail **212** between the first end **E_{F}** and the second end **E_{S}** using the one or more gripper movement mechanism **240.** In such instances, the gripper movement mechanism **240** includes a plurality of treatment set movers **242** movingly configured onto each of the support rails **212** such that each of the movers **242** is adapted to movingly engage one of the gripper sets **220** therewith. Further in such embodiments, the predetermined arrangement of the gripping heads **222** within each of the gripper sets **220** may be changed dynamically only in a widthwise direction by moving the rails **212** towards and/or away from each other.

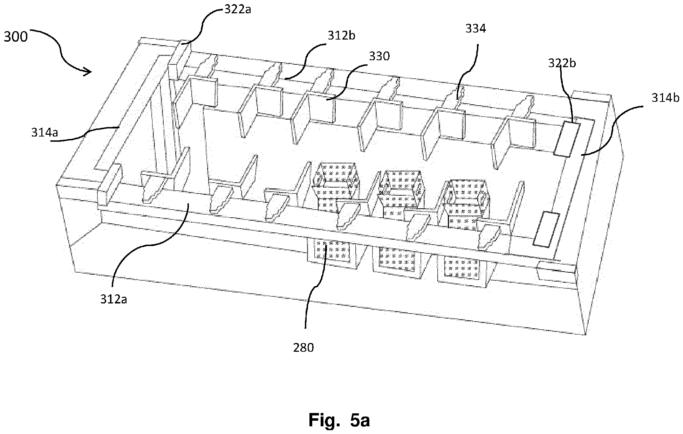

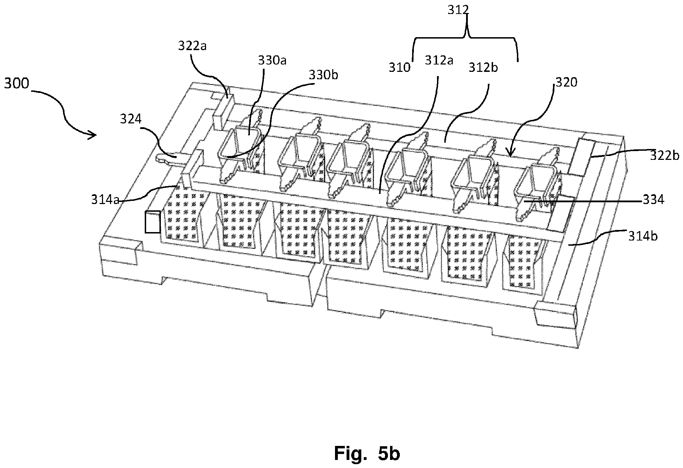

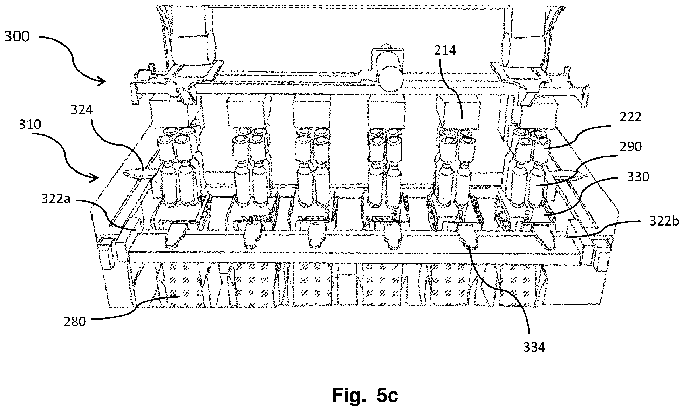

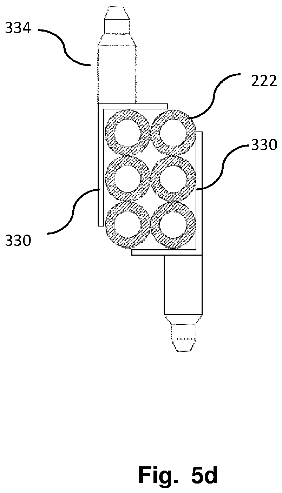

In an embodiment of the present invention, as illustrated in Figs. 5a, 5b, 5c, the article picking and treating apparatus **200** further includes a guiding unit **300** for facilitating the release of the already picked articles **290** within the package **280** such that closure of the package **280** is avoided during the article release operation. Further, such guiding unit **300** is adapted to guide the release of the containers **290** in the package **280** with a funnel effect, so as to avoid any contact between the containers **290** and sidewalls **282** of the package **280** such that any damage and/or scratch to the package **280** and/or articles **290** during the release operation is avoided. The guiding unit includes **300** an overhead frame **310** (Fig. 5c) formed of at least two spaced apart generally parallel longitudinal rails **312** including a first longitudinal rail **312a,** and a second longitudinal rail **312b** connecting and extending between two or more spaced apart generally parallel transverse rails **314** including a first transverse rail **314a,** and a second transverse rail **314b.** Each of the longitudinal rails **312a,** and **312b** is movable in a horizontal direction towards and away from each other using one or more guiding rail movement mechanism **320.**

The guiding rail movement mechanism **320** is generally a mechanism allowing the possibility of movement of longitudinal rails **312** of the overhead frame **310** along the transverse rails **314.** In a preferred embodiment, the guiding rail movement mechanism **320** includes one or more pairs of connecting members **322** comprising a first connecting member **322a,** and a second connecting member **322b,** each pair of the connecting members **322** adapted to engage one of the longitudinal rails **312** at its opposite end.

Further, the guiding rail movement mechanism **320** includes a plurality of rail movers **324** movingly connected to the transverse rails **314.** Each of the rail movers **324** is adapted to movingly engage one of the connecting members **322** such that a horizontal movement of each of the pair of connecting member **322** along the corresponding transverse rails **314** is made possible thereby enabling a movement of longitudinal rails **312** in a direction towards and away from each other.

The guiding unit **300** further includes one or more pairs of parallel guiding means **330,** including a first guiding means **330a,** and a second guiding means **330b** (Fig. 5b) movably connected to the parallel longitudinal rails **312a and 312b** through a plurality of guiding movers **334.** Each of the pairs of guiding means **330** is adapted to be received in the package **280** such that each of the guiding means **330a, 330b** conforms to at least one inner side wall (wich may be a corner) of the package **280** such that when in contact with the side wall it avoids a closure of a side-flap extended from the said side wall.

The apparatus **200** further includes a first powering means (not shown) for enabling a movement of the pair of conveying tracks **210,** the overhead frame **310,** the first conveying line **202,** the second conveying line **204,** the grouping means (not shown) and various sub-components thereof. the said first powering means may be a linear servo motor facilitating a continuous operation of each of the components of the article picking and treating apparatus **200.** However, in other embodiments, the first powering means is a linear servo motor facilitating an intermittent operation of each of the components of the article picking and treating apparatus **200.**

The article picking and treating apparatus **200** further includes a second powering means (not shown) for enabling a movement of each of the movers including, the support movers **232,** the treatment set movers **242,** the rail movers **324,** and the guiding movers **334** along the corresponding tracks and/or rails. the said second powering means may be a linear servo motor such as e.g. of a generally moving magnet type of motor conventionally known in the art.

In other embodiments, the movers **232, 242, 324, 334** are utilized as stators whereas the tracks or rails are utilized as the rotors. In such an embodiment, each of the movers **232, 242, 324, 334** include built in coils and each of the corresponding tracks or rails include a plurality of magnets configured thereon in a longitudinal direction such that the movers are able to come into an electromagnetic interaction, thereby enabling their movement.

The article picking and treating apparatus **200** may further include one or more control units (not shown) for managing the operations thereof, and particularly for managing the working of the first and second powering means and thus the movement of the support movers **232** and the treatment set movers **242,** in a predetermined sequence, so as to optimize the grouping of the gripper heads **222** in accordance to a desired predetermined arrangement of articles **290** in a package **280.**

In some embodiments, the control unit may include an input unit for receiving the predetermined arrangement of articles **290** to be formed and received within the package **280.** Further, the control unit may include a plurality of sensors for tracking the parameters such as for example, position of the package **280,** arrangement of articles **290,** and the like. The control unit may further include a processor unit for processing the data captured by the input unit on the basis of predetermined logics and rules for facilitating the movement of the components of the article picking and treating apparatus **200.** The control unit may further include an instruction unit that delivers the instructions to various components such as various powering means, linear motors, motors, driving units, or the like, to facilitate a desired and smooth operation.

In some embodiments, the control unit may be provided as a computer program product, such as may include a computer-readable storage medium or a non-transitory machine-readable medium maintaining instructions interpretable by a computer or other electronic device, such as to perform one or more processes.

FIG. 2 schematically show the arrangement of the basic components of the article picking and treating apparatus **200** of the present invention. However, in the construction of commercial functional units, secondary components such as couplers, connectors, support structures and other functional components known to one of skill in the field of article picking and treating apparatuses and more particularly the article picking and treating apparatuss for secondary package for use with conveyor systems, may be incorporated within the article picking and treating apparatus **200.** Such commercial arrangements are included in the present invention as long as the structural components and arrangements disclosed herein are present. Accordingly, it is to be contemplated that the article picking and treating apparatus **200** may be configured to be used for any kind of secondary packages of any possible shape as deems possible without deviating from the scope of the current invention.

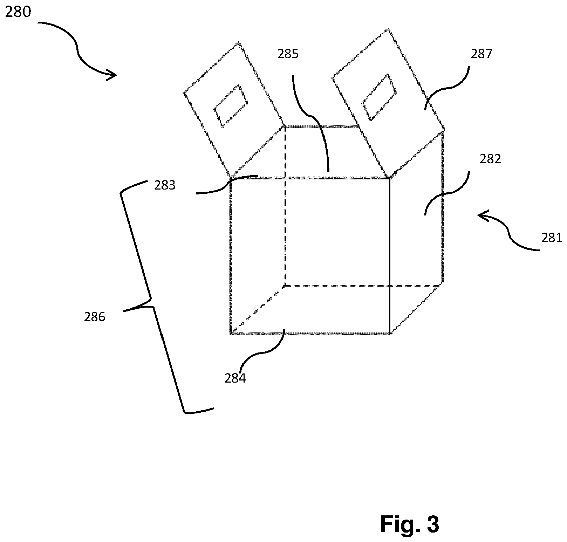

In a preferred embodiment, the secondary package generally represented by the numeral **280,** as illustrated in Fig. 3, the secondary package **280** includes a top opened package formed of a foldable blank **281** and having a plurality of sidewalls **282** extending between a pair of horizontal surfaces **286,** including a top open surface **283,** and a bottom surface **284,** defining an inner surface **285** therewithin, and optionally having one or more flaps **287.**

Further, within the preferred embodiment, the secondary package **280** may be formed from a recyclable material selected from one or more of, but not limited to, any desired material such as including all kind of papers, fiberboard, corrugated board, foldable blanks, hybrid material, or any combinations thereof. In some other embodiments, the secondary package **280** may be made of a light-weight plastic material selected from one or more of but not limited to plastic material such as group of thermoplastics including acetal, acrylic, cellulose acetate, polyethylene, polystyrene, vinyl, and nylon.

Further, the shape and size, including the height of the package **280** may be varied depending on the design constraints and requirements for its application. For example, within the instances when the **280** is adapted to house twelve containers in one layer in a 3x4 arrangement the carton is dimension accordingly. Further, in other instances, the carton may be sized and shaped to hold containers of a different or same quantity in a single layer, more than two layers, and/or in different row/column arrangements (e.g., 1×6, 3×6, 2×6, 4×6, 2×3×4, 2×6×2, 2×9, 3×5, 3×5×2, etc.). Further, in yet other instances, the packages **280** may be formed in various possible symmetrical as well as asymmetrical shapes.

In a preferred embodiment of the present invention, each of the conveying tracks **210** of the article picking and treating apparatus **200** including the pair of conveying circular tracks **210,** the first conveying line **202,** and the second conveying line **204** may be generally vertically or horizontally positioned circular tracks conventionally known in the art. In yet other embodiments of the present invention, each of the conveying tracks **210** of the article picking and treating apparatus **200** including the pair of conveying circular track **210,** the first conveying line **202,** and the second conveying line **204** may be configured as virtual closed loop conveyors.

As known in the art, the virtual closed loop conveyor is generally a closed loop conveyor similar to a circular conveyor, in which the circular connecting edges of the conveyors on both the ends are replaced by a straight shiftable conveyor portions adapted to move back and forth and avoiding the need of moving the movers through the entire circumference of the circular track, and is therefore a very fast and cost efficient alternative to the conventionally known closed loop conveying tracks.

It is to be contemplated that an article, as used within the present invention, may be any kind of article such as including all possible food items, house-hold items, stationary items, and others, and manufactured, distributed etc.. in all possible industries.

Optionally, in case of a packaging operation according to Fig. 2, the step of releasing the set of already picked up articles **290** includes an additional step of using the guiding means **300** for avoiding the closure of the secondary package **280** during the release operation of the gripper set **220.** Such an action is performed by first moving the guiding unit **300** over the second conveying line **204** where a feed of top opened secondary packages **280** is received in such a way that at least one of the pair of guiding means **330,** is received within a secondary package **280** and adapted to conform to inner sidewalls thereof, thereby avoiding the possibility of closure thereof. Further, such guiding unit **300** avoids any damage to the sidewalls **282** of the package **280** and the articles **290** during the dropping operation. In a preferred embodiment of the present invention, a pair of guiding means **234,** may have a generally L shape, adapted to support two adjacent walls of the secondary package **280.** However, in other embodiments, any number of pairs of guiding means **330,** may be used in accordance to the shape of the package **280.**

## Claims

1. An apparatus for picking and treating articles comprising:
a pair of parallel closed loop conveying tracks having one or more pair of vertically movable modular track portions;
a plurality of support means configured transversally to the pair of closed loop conveying tracks, each support means extending between and connected to the pair of conveying tracks at its opposite ends through a support moving mechanism;
a plurality of gripper sets movingly configured onto one or more of the support means;
wherein a horizontal movement of the plurality of support means across the pair of circular tracks and a vertically upward and/or downward movement of the one or more pair of modular track portions is synchronized in such a way that one or more of the gripper sets is adapted to selectively pick up a set of articles from a first location while one or more of the gripper sets selectively treat a set of already picked articles at a second location.

2. The apparatus of claim 1, wherein the support means is a support rail adapted to movingly support the plurality of gripper sets.

3. The apparatus of claim 1, wherein each of the gripper sets comprising one or more of individual gripping heads arranged in a predetermined configuration, each gripping head adapted to pick up ane article from the first conveying line.

4. The apparatus of claim 2, wherein each of the gripper sets is longitudinally movable onto the corresponding support means through a gripper movement mechanism.

5. The apparatus of claim 1, wherein the support movement mechanism comprises a plurality of pair of support movers movingly configured onto the pair of conveying tracks, each of the pair of support movers adapted to movingly engage one of the support means through an engagement means.

6. The apparatus of claim 5, wherein the engagement means comprises a pair of engaging lugs each connected to the one of the pair of support movers and adapted to engage one end of the support means such that a horizontal movement of the pair of support movers horizontally moves the support means connected there between.

7. The apparatus of claim 1, wherein at least one of the gripper sets is adapted to pick up the set of articles from a first conveying line, and at least one another gripper sets is adapted to drop an already picked up set of articles simultaneously and at the same time in a package at a second conveying line.

8. The apparatus of claim 7, wherein each of the gripper set is adapted to orient the picked-up articles before dropping into the package at the second conveying line.

9. The apparatus according to any of aforementioned claims, further comprising a first powering means for powering the pair of closed loop conveying tracks and a second powering means for enabling a movement of each of the plurality of movers including the support movers and the gripping movers, wherein the first and second powering means are selected from one or more of, but not limited to, linear motors, servo motors and synchronic and/or asynchronic motor drives.

10. The apparatus of any of the claims 1-9 further comprising a control unit for optimizing a movement of each of the conveying tracks, the support movers, the gripping movers, the gripping heads, in accordance to a desired pick-up and/or a drop operation either continuously and/or intermittently.

11. The apparatus of any of the claims 19, wherein the first conveying line comprises one or more means for grouping and arranging the articles in a predetermined configuration.

12. The apparatus of any of the claims 1-11, wherein the second conveying line comprises an output of a carton forming unit carrying a supply of cartons to be packaged with articles.

13. The apparatus of claim 1 further comprising a guiding unit adapted to keep the package at the second conveying line opened during the release of already picked up articles therein.

14. The apparatus of claim 1, wherein one or more of the support means supports an article treatment device different from the gripper sets.
